Europäisches Patentamt

European Patent Office

Office européen des brevets

(11) Veröffentlichungsnummer: **0 214 453 B1**

## (12) EUROPÄISCHE PATENTSCHRIFT

(45) Veröffentlichungstag der Patentschrift: **25.03.92**

(21) Anmeldenummer: **86110632.6**

(22) Anmeldetag: **31.07.86**

(51) Int. Cl.⁵: **G01S 15/87**, B65F 3/04, B25J 19/02

(54) **System zur Bestimmung der Lage eines Objekts relativ zu einer Handhabungseinrichtung.**

(30) Priorität: **13.08.85 DE 3529049**
**17.09.85 DE 3533168**

(43) Veröffentlichungstag der Anmeldung:
**18.03.87 Patentblatt 87/12**

(45) Bekanntmachung des Hinweises auf die
Patenterteilung:
**25.03.92 Patentblatt 92/13**

(84) Benannte Vertragsstaaten:
**AT BE CH DE FR GB IT LI LU NL SE**

(56) Entgegenhaltungen:
**EP-A- 0 138 055**
**EP-A- 0 163 859**
**WO-A-85/00229**
**US-A- 3 458 853**

(73) Patentinhaber: **EDELHOFF M.S.T.S. GMBH**
**Heckenkamp**
**W-5860 Iserlohn 5(DE)**

(72) Erfinder: **Ahrens, Uwe**
**Lyonerstrasse 56**
**W-6000 Frankturt 71(DE)**
Erfinder: **Drunk, Gerhard**
**Nobelstrasse 12**
**W-7000 Stuttgart 80(DE)**

(74) Vertreter: **Gossel, Hans K., Dipl.-Ing. Lorenz-**
**Seidler-Gossel et al**
**Widenmayerstrasse 23**
**W-8000 München 22(DE)**

Rank Xerox (UK) Business Services

## Beschreibung

Die Erfindung betrifft ein System zur Bestimmung der Lage eines Objektes relativ zu einer Handhabungseinrichtung in mindestens einer Ebene, wobei das System einerseits mindestens drei Ultraschallsensoren, die aus Ultraschallsendern und - empfängern bestehen und an der Handhabungseinrichtung angeordnet sind, und andererseits vorbestimmte Merkmale, die an dem Objekt angeordnet sind, aufweist.

Um eine Handhabungseinrichtung, die beispielsweise aus einer Greif- oder Kupplungseinrichtung bestehen kann, zu einem zu ergreifenden und zu handhabenden Objekt automatisch ausrichten zu können, ist es erforderlich, die relative Lage der Handhabungseinrichtung zu dem Objekt in zwei sich vorzugsweise rechtwinklig kreuzenden Ebenen zu bestimmen, so daß entsprechend den erfaßten Koordinaten über eine vorzugsweise elektronische Steuereinrichtung die die Handhabungseinrichtung bewegenden Antriebseinrichtungen entsprechend beaufschlagt werden können.

Als Sensoren zur Bestimmung der relativen Lage zweier Objekte kommen videooptische Sensoren in Betracht. Diese können jedoch trotz ihrer hohen Kosten nur unter starken Einschränkungen wegen der jeweiligen Beleuchtungsverhältnisse, der Farbkontraste und der Messpositionen eingesetzt werden. Derartige videooptische Sensoren sind weiterhin außerodentlich empfindlich und können unter rauhen Betriebsbedingungen, wie sie beispielsweise bei dem Erfassen und Kippen von Müllbehältern bei der Müllabfuhr gegeben sind, beschädigt werden. Schliesslich ist es sehr schwierig, mit videooptischen Sensoren die zusätzlich benötigte Abstandsinformation zu erhalten.

Weniger störanfällig und für einen rauhen Handhabungsbetrieb geeigneter sind Ultraschallsensoren, die aus Ultraschallsendern und - empfängern bestehen. Bekannt sind gegenwärtig jedoch lediglich Ultraschallsensoren, die einen Abstand gegen eine ebene Fläche zu messen vermögen. Um aber mit einer Handhabungseinrichtung die Lage eines zu handhabenden Objekts erfassen und dieses anschliessend ergreifen zu können, ist zusätzlich auch eine Seiten- und Höhenausrichtung erforderlich.

Bereits aus der EP 138 055 A1 ist eine Ultraschall-Steuerung eines Robotergreifers mit Signal-Integration derjenigen Echosignale, die von einem anvisierten Ort kommen, durch entsprechende Zuordnung bekannt. Hier ist bereits schon angedeutet, daß bei Verwendung mehrerer Wandler eine entsprechende Eindeutigkeit der Ortserkennung erzielt wird.

Aus der WO 85/00 229 ist bereits ein System gemäß dem Oberbegriff des Anspruchs 1 bekannt, welches in der Lage ist, geometrische Parameter wie Position, Orientierung und/oder Umrisse eines Objektes zu messen.

Eine Greifeinrichtung zum Erfassen eines Objektes ist in ihrer Handhabung bereits dann wesentlich erleichtert, wenn eine automatische Ausrichtung in einer Ebene erfolgt, so daß beispielsweise zum Ankuppeln des Objektes an die Handhabungseinrichtung nur noch eine vorzugsweise geradlinige Bewegung in einer Ebene ausgeführt werden muß, die sich leicht durch eine Handbetätigung ausführen läßt.

Aufgabe der Erfindung ist es daher, ein System der eingangs angegebenen Art zu schaffen, daß mit Ultraschallsensoren die Bestimmung der Lage einer Handhabungseinrichtung zu einem Objekt ermöglicht, so daß die Annäherung der Handhabungseinrichtung an das Objekt in mindestens einer Ebene automatisch erfolgen kann.

Erfindungsgemäß wird diese Aufgabe bei einem System der eingangs angegebenen Art dadurch gelöst, daß die daß die an der Handhabungseinrichtung angeordneten abstandsmessenden Ultraschallsensoren zu einer gemeinsamen Bezugsebene angewinkelt sind, wobei zwei auf ein erstes langgestrecktes linienförmiges Merkmal und der dritte auf ein zweites langgestrecktes linienförmiges Merkmal des Objektes ausrichtbar sind, daß die linienförmigen Merkmale derart angeordnet sind, daß die Schallwellen der Ultraschallsensoren parallel zur Einfallsrichtung reflektiert werden, und daß die beiden linienförmigen Merkmale parallel zueinander mit vorbestimmtem Abstand voneinander verlaufen.

Mit dem erfindungsgemäßen System läßt sich die Lage eines Objektes zu einer Handhabungseinrichtung in den drei Koordinaten X und Y und der Drehung C um eine durch die Koordinaten X und Y definierten Punkt in einer Ebene bestimmen. Die erfindungsgemäße Anordnung der Ultraschallsensoren zu den Linienmerkmalen ermöglicht die Erfassung des Abstandes dieser Linienmerkmale zu den Sensoren. Dadurch, daß mindestens ein Linienmerkmal durch zwei Ultraschallsensoren und ein weiteres Linienmerkmal durch einen weiteren Ultraschallsensor angepeilt werden, läßt sich eine genaue Lagebestimmung in einer Ebene vornehmen. Diese Lagebestimmungen können so oft wiederholt werden, bis die Handhabungseinrichtung durch entsprechende Steuereinrichtungen in die gewünschte Position zu dem Objekt gebracht worden ist.

In dem erfindungsgemäßen System muß die Breite der Meßkeule jedes einzelnen Ultraschallsensors so gewählt werden, daß das jeweilige Linienmerkmal für den gesamten zulässigen Messbereich des Objekts immer in der Meßkeule des entsprechenden Ultraschallsensors verbleibt, weil sonst keine Erfassung möglich ist. Weiterhin müssen direkte Reflektionen von der Oberfläche des Objekts vermieden werden, weil der Schall beim Auftreffen auf eine ebene Oberfläche dem Reflektionsgesetz "Einfallswinkel gleich Ausfallswinkel" unterliegt. Alle Ultraschallwandler müssen daher derart schräg zur Objektfläche angeordnet sein, daß alle auf diese auftreffenden Schallwellen aus dem Empfangsbereich des Sensors herausreflektiert werden und keine direkten Echos auftreten. Lediglich an den Linienmerkmalen muß die gewünschte Reflektion der Schallwellen erfolgen. Innerhalb der Schallkeulen der Sensoren dürfen am Objekt sowie der unmittelbaren Umgebung des Objektes keine ein störendes Echo erzeugenden Teile vorhanden sein. Die Schallkeulen der Ultraschallsensoren müssen daher derart ausgeformt sein, daß Störbereiche nicht in das Erfassungsfeld des Sensors fallen.

Das erfindungsgemäße System ermöglicht somit die Erfassung der Position eines beispielsweis auf einem annähernd ebenen Untergrund stehenden Objektes unterschiedlicher Art, beispielsweise eines Müllbehälters, in einer horizontalen Ebene. Zum Ankuppeln der Handhabungseinrichtung an das Objekt, beispielsweise einen Müllbehälter, wäre daher nur noch eine Erfassung der Höhe der Handhabungseinrichtung über dem Boden erforderlich, die in einfachster Weise ebenfalls durch einen Ultraschallsensor erfolgen kann.

Gegenüber videooptischen Sensorsystemen erweist sich das erfindungsgemäße System als robust und störungsunanfällig. Verschmutzungen vermögen die Funktion der Ultraschallsensoren und der durch die Linienmerkmale gebildeten Reflektoren grundsätzlich nicht zu beeinträchtigen. Das System liefert die erforderlichen Informationen nicht nur über den Abstand der Handhabungseinrichtung zu dem Objekt, sondern ermöglicht darüberhinaus auch eine Seiten- oder Höhenausrichtung und die Einhaltung eines Seiten- und Höbensicherheitsabstandes. Bei niedrigen Kosten des Systems ist höchste Unempfindlichkeit gegen Umweltbedingungen, wie Beleuchtung, Staub, Spritzwasser, Temperatur und mechanische Stösse gegeben. Störeinflüsse aus der Umgebung des Objektes sind grundsätzlich nicht zu befürchten.

Zweckmäßigerweise sind die Ultraschallsensoren in einer Ebene angeordnet, was die Verarbeitung der Signale in elektronischen Anpassungs- und Rechenschaltungen vereinfacht.

Weiterhin ist es zweckmäßig, die Ultraschallsensoren auf einer gemeinsamen geraden Linie anzuordnen, was die Rechenoperationen weiterhin vereinfacht.

Zweckmäßigerweise ist ein vierter Ultraschallsensor auf das zweite linienförmige Merkmal gerichtet. Dieser kann der Bestimmung der Koordinaten eines zweiten Punktes in der Messebene anstelle der Erfassung des Drehwinkels um den ersten Punkt dienen. Zweckmäßiger ist es jedoch, die Messung durch diesen vierten Ultraschallsensor als redundanten Meßwert zur Plausibilitätskontrolle zu verarbeiten.

Die Linienmerkmale können aus rechtwinkelig auf einer ebenen, zu erfassenden Wandung des Objektes stehenden Leiste oder aus in der Wandung verlaufenden Riefen oder nutförmigen Vertiefungen mit mindestens zwei rechtwinkelig zueinander stehenden Flanken und/oder Wandungen bestehen, so daß einfallende Schallwellen in die Einfallsrichtung zurückreflektiert werden.

Die Linienmerkmale können auch aus rauhen Streifen bestehen, die auftreffende Schallwellen in alle Richtungen, also auch in die Einfallsrichtung reflektieren. Eine Reflektion in allen Richtungen erfolgt beispielsweis auch an stegartig verlängerten Kanten des Objektes.

Um das Objekt in allen Dimensionen erfassen zu können, sind in weiterer Ausgestaltung der Erfindung winkelig, vorzugsweise rechtwinkelig, zu der ersten Gruppe von Ultraschallsensoren eine zweite Gruppe von Ultraschallsensoren angeordnet, die entsprechende diesen zugeordnete Linienmerkmale erfassen.

Um die Erfassung auf die drei Dimensionen X, Y, Z und drei Orientierungen A, B, C um die Achsen im Raum zu erweitern, können auch punktförmige schallreflektierende Merkmale, zum Beispiel Triplespiegel, vorgesehen werden.

Um zu verhindern, daß die Ultraschallsensoren einander stören, können die einzelnen Ultraschallsensoren in zeitlichen Abständen aktiviert werden, wobei zwischen den Umschaltungen eine Sicherheitszeit zu legen ist, in der sich mögliche Mehrfachreflektionen so weit abschwächen, daß sie nicht mehr empfangen werden können.

Eine gegenseitige Störung kann auch dadurch ausgeschlossen werden, daß die einzelnen Ultraschallsensoren mit unterschiedlichen Frequenzen betrieben werden. Um hierbei eine gegenseitige Beeinflussung auszuschliessen, muß allerdings sichergestellt sein, daß keine störenden Mischfrequenzen entstehen.

Die mit dem vorstehend beschriebenen Meß- und Erfassungssystem versehene Handhabungseinrichtung eignet sich in besonders vorteilhafter Weise zur automatischen Steuerung einer Hubkippvorrichtung für ein Müllsammelfahrzeug mit einer an einem Hubarm angeordneten Kupplungseinrichtung für mit entsprechenden komplementären Kupplungseinrichtungen versehene Müllbehälter.

Hubkippvorrichtungen dieser Art sind in unterschiedlichen Ausführungsformen bekannt. Das Einsammeln von Müll durch mit diesen versehene Müllsammelfahrzeuge geschieht dadurch, daß von den Müllwerkern die bereitgestellten Müllbehälter auf die Kupplungseinrichtung zur Herstellung der kuppelnden Verbindung aufgesetzt werden, so daß nach der Verriegelung der Müllbehälter mit der Kupplungseinrichtung das Heben und Kippeln erfolgen kann.

Aus der nicht vorveröffentlichten DE-OS 34 20 058 ist eine Hubkippvorrichtung mit mindestens einem um eine Querachse der Schütteinheit oder des Chassis schwenkbarem Hubarm bekannt, der an seinem freien Ende eine zu der Querachse parallele Grundschiene trägt, die zwischen ihrem Aufnahmebereich etwa unterhalb und vor dem Führerhaus und ihrem Schüttbereich oberhalb und hinter dem Führerhaus schwenkbar und mit ausfahrbaren und/oder ausschwenkbaren Einrichtungen zum Ergreifen von oder Ankuppeln an bereitgestellte Müllbehälter versehen ist. Mit derartigen Hubkippvorrichtungen ausgestattete Müllsammelfahrzeuge gestatten es bei ausreichender Übung und Geschicklichkeit des Fahrers, daß dieser an die bereitgestellten Müllbehälter heranfährt, die Müllbehälter unter Kupplung mit der Hubkippvorrichtung aufnimmt, hebt und entleert und wieder absetzt. Obwohl der Fahrer aufgrund der Anordnung des Führerhauses und seines Sitzes eine gute Übersicht hat, ist die Steuerung der Aufnahmeklaue des Hubarms im Kupplungsbereich der Kupplungseinrichtung des Müllbehälters außerordentlich schwierig.

Aufgabe der Erfindung ist es daher, eine Hubkippvorrichtung der eingangs angegebenen Art zu schaffen, die ein automatisches Kuppeln mit dein Müllbehälter ermöglicht, so daß das Ankuppeln nicht mehr allein von der Geschicklichkeit des Fahrer abhängt.

Erfindungsgemäß wird diese Aufgabe bei einer Vorrichtung der eingangs angegebenen Art dadurch gelöst, daß die Kupplungseinrichtung des Hubarms durch entsprechende Antriebe heb- und absenkbar, relativ zum Müllsammelfahrzeug seitlich ausfahrbar und/oder ausschwenkbar und um eine vertikale Achse schwenkbar ist, daß die Kupplungseinrichtung oder mit dieser verbundene Teile mit aus Sendern und Empfängern bestehenden Sensoren versehen sind, die deren Höhe über der Standfläche und durch besondere Marken oder die Konturen und/oder Umrisse des Müllbehälters den jeweiligen Abstand zum Müllbehälter erfassen, und daß eine Steuereinrichtung vorgesehen ist, die entsprechend den von den Sensoren erzeugten Signalen die Antriebe zum kuppelnden Eingriff der Kupplungseinrichtung des Hubarms in die Kupplungseinrichtung des Müllbehälters betätigt.

Die erfindungsgemäße Vorrichtung gestattet eine weitgehende Automatisierung des Mülleinsammelbetriebes. Der Fahrer braucht die mit dem Hubarm verbundene Kupplungshälfte der Hubkippvorrichtung lediglich in die Nähe des bereitgestellten und zu entleerenden Müllbehälters zu bringen, und zwar nur so weit, daß die Sensoren Marken oder Umrisse des Müllbehälters zu erfassen vermögen, so daß durch Betätigung der entsprechenden Automatik die Ankupplung des Müllbehälters und dessen Verkippen automatisch erfolgt. Dabei kann die an dem Müllbehälter vorgesehene Aufnahme aus einer etwa dreieckigen Aufnahmetasche mit mittiger, nach oben weisender abgerundeter Spitze bestehen, deren dem Müllbehälter zugewandte Vorderwand im wesentlichen eben ist und deren Rückwand keilförmig schräg oder kalottenartig abgerundet nach außen verläuft, so daß der Behälter in zwei Achsrichtungen (x und y) sowie in Drehrichtung um eine vertikale Achse (c) beim Aufnehmen zentriert wird. Die an dem Hubarm vorgesehene Kupplungseinrichtung weist einen entsprechend komplementär geformten dreieckigen Aufnahmekeil auf.

Um der Kupplungseinrichtung der Hubkippvorrichtung die notwendigen Freiheitsgrade zu verleihen, kann diese mindestens einen um eine Querachse der Schütteinheit oder des Chassis des Müllsammelfahrzeugs schwenkbaren Hubarm aufweisen, der an seinem freie Ende eine zu der Querachse parallele Grundschiene trägt, die zwischen ihrem Aufnahmebereich und ihrem Schüttbereich schwenkbar ist, wobei die Kupplungseinrichtung auf einem horizontalen Träger längsverschieblich geführt ist, der um eine vertikale Achse schwenkbar auf einem Schwenkarm gelagert ist, der um eine zweite vertikale Achse auf einem auf der Grundschiene verschieblich geführten Träger gelagert ist.

Die von den Sensoren betätigte Steuereinrichtung ist zweckmäßigerweise mit einer Automatik versehen, die nach Annäherung der Kupplungseinrichtung an den Müllbehälter in den Wirkbereich der Sensoren die Antriebe zum kuppelnden Eingriff, Verriegeln, Heben, Schütten und lagerichtigen Absetzen steuert.

Die Höhe der Aufnahmeklaue des Greifers relativ zur Fahrbahn kann mittels Sensoren bestimmt werden, die über die Steuereinrichtung den Greifer in einer bestimmten Höhe zur Fahrbahn halten.

Der Müllbehälter kann mit Sicken, Hohlkehlen oder Rippen versehen sein, die von den Sensoren angepeilt werden.

Zweckmäßigerweise bestehen die Sensoren aus abstandsmessenden Ultraschallsensoren.

Als Sensoren oder Fühler kommen auch Scanner, Fernsehkameras und andere Einrichtungen in Betracht, die eine Abstandsmessung und Steuerung der Kupplungseinrichtung ermöglichen.

Ein Ausführungsbeispiel der Erfindung wird nachstehend anhand der Zeichnung näher erläutert. In dieser zeigt

| | |
|---|---|
| Fig. 1 | eine Draufsicht auf eine mit Ultraschallsensoren versehene Greifeinrichtung einer Hub-Kippvorrichtung eines Müllwagens bei Annäherung an einen mit Linienmerkmalen versehenen Müllbehälter in schematischer Darstellung, |
| Fig. 2 | eine schematische Darstellung der Ausbildung der Schallkeule eines Ultraschallsensors, |
| Fig. 3 | die Reflektion der Ultraschallwellen an eine senkrecht auf einer ebenen Fläche des Objektes stehenden Rippe, |
| Fig. 4 | unterschiedliche Ausbildungen der schallwellenreflektierenden Linienmerkmale im Schnitt, |
| Fig. 5 | eine Draufsicht auf ein Müllsammelfahrzeug mit einer einen Greifarm mit einer Kupplungseinrichtung aufweisenden Hubkippvorrichtung, die das Ankuppeln an einen bereitgestellten Müllbehälter ermöglicht, in schematischer Darstellung, |
| Fig. 6 | eine perspektivische Darstellung eines Müllbehälters und einer diesen ergreifenden kuppelnden Einrichtung nach deren Annäherung in den Wirkungsbereich der Sensoren, |
| Fig. 7 | eine schematische Darstellung der Steuereinrichtung der Hubkippvorrichtung, |
| Fig. 8 | eine schematische Darstellung der mit den Sensoren versehenen Kupplungseinrichtung mit der Auswerteelektronik und |
| Fig. 9 | ein Blockschaltbild der Sensoren mit zugehöriger Steuereinrichtung. |

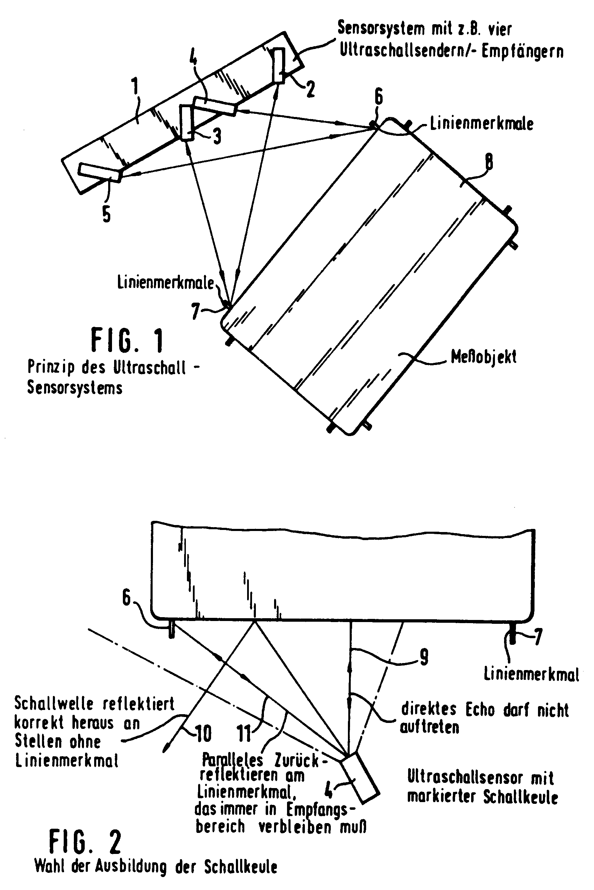

Bei dem System nach Fig. 1 ist beispielsweise der schematisch dargestellte Basisträger I einer mit einer nicht dargestellten Greifklaue versehenen Greifeinrichtung einer Hub-Kippvorrichtung für Müllwagen mit jeweils zwei paarweise angeordneten Ultraschallsensoren 2, 3 und 4, 5 versehen, die jeweils den Abstand zu parallel zueinander auf der Vorderwand des Müllbehälters 8 verlaufenden und rechtwinkelig auf dieser stehenden Leisten 6, 7 erfassen. Die Ultraschallsensoren 2,3,4,5 sind in einer gemeinsamen Ebene angeordnet und liegen winkelig zu einer zweiten, zu der ersten rechtwinkeligen Ebene. Die aus den Rippen 6, 7 bestehenden Linienmerkmale weisen einen vorbestimmten Abstand zueinander auf, so daß sich durch die mit den Ultraschallsensoren 2, 3 vorgenommenen Abstandsmessungen die punktförmige Lage des Linienmerkmals 7 in der Ebene und durch eine der mit den Ultraschallsensoren 4, 5 vorgenommene Abstandsmessung zu dem Linienmerkmal 6 die Drehung des Müllbehälters 8 um den durch das Linienmerkmal 7 bestimmten Punkt errechnen läßt.

Die nicht für die Errechnung des Drehwinkels benötigte Abstandsmessung durch die Ultraschallsensoren 4 oder 5 wird als redundanter Messwert zur Plausibiltätskontrolle verarbeitet.

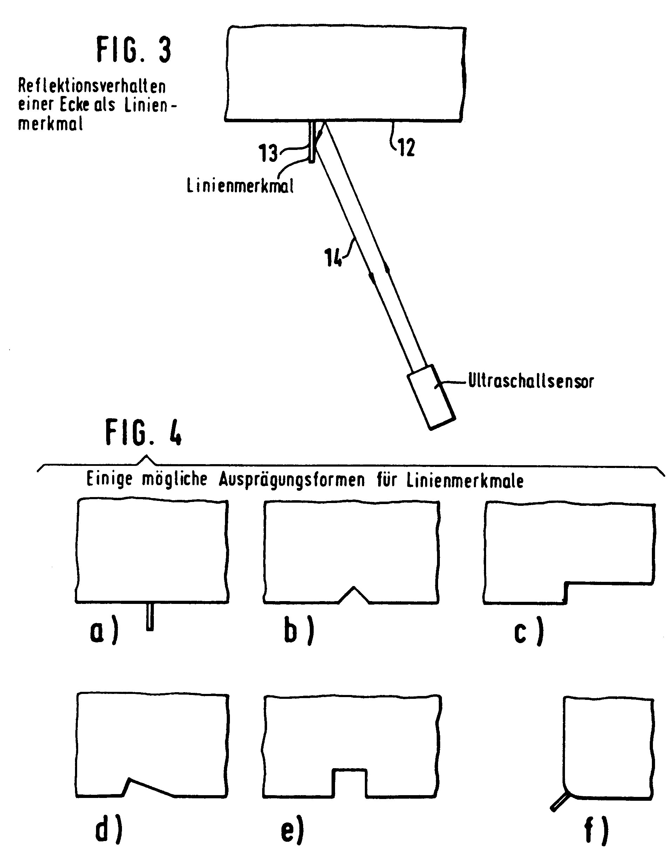

Aus der Fig. 2 ist ersichtlich, daß die Schrägungswinkel der Ultraschallsensoren derart gewählt sind, daß auf die Empfänger der Ultraschallsensoren keine direkt reflektierten Schallwellen treffen. Die Schrägung muß so gewählt werden, daß das direkt reflektierte Signal 9 nicht auftritt. Vielmehr müssen alle nicht der Messung dienenden Schallwellen 10 derart reflektiert werden, daß kein störendes Echo entsteht. Lediglich die auf das Linienmerkmal 6 oder 7 treffende Schallwelle 11 wird parallel zu sich selbst reflektiert. Die Art der Reflektion an einem Linienmerkmal ist aus Fig. 3 ersichtlich. Da der Einfallswinkel gleich dem Ausfallswinkel ist, ergibt sich aus der Doppelreflektion an der Behälterwandung 12 und der stegförmigen Rippe 13 die dargestellte Parallelreflektion der Schallwelle 14.

Aus Fig. 4 sind mögliche Ausgestaltungen von die einfallende Schallwelle parallel reflektierenden Linienmerkmalen ersichtlich. Fig. 4a zeigt das Ausführungsbeispiel mit einer rechtwinkelig auf der Wandung stehenden Rippe.

Bei den Ausführungsbeispielen nach den Fig. b - e sind Nuten oder Einkerbungen mit rechtwinkelig aufeinanderstehenden Flanken oder Wandungsteilen vorgesehen, die durch versteifende Dicken oder dergleichen gebildet werden können. Bei dem Ausführungsbeispiel nach Fig. 4c ist eine Stufe vorgesehen, die sich ebenfalls leicht in die Konstruktion des zu erfassenden Objektes einfügen läßt.

Bei dem Ausführungsbeispiel nach Fig. 4f ist an einer Objektecke ein stegartiger Fortsatz vorgesehen, der eine Schallreflektion in allen Richtungen bewirkt.

Das beschriebene Sensorsystem ermöglicht die Bestimmung der Lage eines Behälters in den Koordinaten x und y sowie der Drehung C auf der Ebene. Dabei bezeichnen x und y die seitliche Verschiebung sowie den Abstand zum Fahrzeug und C die Verdrehung auf der als annähernd eben angenommenen Bereitstellungsfläche. Dies wird erreicht, indem der Abstand zu zwei Linienmerkmalen senkrecht zur Meßebene bestimmt wird. Jedes dieser Linienmerkmale wird wiederum aus jeweils zwei Richtungen durch eine Anordnung von abstandsmessenden Ultraschall-Sensoren angepeilt.

Die Abstandsmessung mit den Ultraschallsensoren erfolgt nach dem Laufzeitprinzip. Dabei wird unter Zugrundelegung der Schallgeschwindigkeit in Luft die Zeit zwischen einem ausgesandten Ultraschall-Impuls und dem vom nächsten Hindernis reflektierten und empfangenen Echo ausgewertet. Im einzelnen werden von jeweils zwei abstandmessenden Ultraschall-Sensoren in einer Ebene parallel zum Boden und aus unterschiedlichen Winkeln zwei in einem festen Abstand am zu erkennenden Behälter angebrachte, vertikal angeordnete Linienmerkmale angepeilt. Aus den aus unterschiedlichen Winkeln zum jeweiligen Linienmerkmal erhaltenen Abstandswerten kann die Position eines Linienmerkmals bestimmt werden. Aus der erkannten Position des zweiten Linienmerkmals kann zusätzlich die Orientierung des Behälters bestimmt werden.

Als Linienmerkmal werden schmale Streifen, die in alle Richtungen reflektieren, verwendet. Dabei sind, wie bereits beschrieben, einfache Kanten, die bei Versteifungsrippen ohnehin aus konstruktiven Gründen sinnvoll sind, ausreichend.

Der Vergleich der ermittelten Position der beiden Linienmerkmale mit dem bekannten feststehenden Abstand der Merkmale zueinander liefert eine Plausibilitätskontrolle für die Meßwerte.

Die vier ermittelten Abstände werden in einen Rechner eingegeben und dort über trigonometrische Umrechnungen in die gesuchten Relativwerte x, y, C umgerechnet, die dann für die Lagesteuerung von zusätzlichen Greiferachsen verwendet werden können.

Außerdem wird von dem Rechner die Steuerung des Gesamtablaufs durchgeführt.

Das beschriebene Sensorkonzept bietet insbesondere auch gegenüber anderen denkbaren Lösungen die folgenden Vorteile:

Niedrige Kosten des Systems aufgrund der Verwendung des Ultraschallprinzips und der Optimierung der Anordnung,

Unempfindlichkeit gegen Umweltbedingungen, wie Beleuchtung, Staub, Spritzwasser, Temperatur und mechanische Stöße,

preiswerte und konstruktiv sinnvolle Merkmale an den Behältern,

weitgehende Unabhängigkeit von Objekten in der Umgebung des Behälters,

seitliche Erfassung der Behälterposition.

Das Meßverfahren erfordert keinen großen Abstand zwischen Sensor und Behälter, da ein Ausschnitt des Behälters für die Erkennung genügt.

Die Linienmerkmale sind derart auszuführen, daß innerhalb der Schallkeule eine aus einem beliebigen Winkel kommende, auf das Merkmal auftreffende Schallwelle in die gleiche Richtung parallel zurückreflektiert wird.

Diese Bedingung erfüllen beispielsweise, wie in der Zeichnung dargestellt, rechtwinkelige Ecken. Unabhängig vom Einfallwinkel wird die auf die erste Ebene der Ecke auftreffende Schallwelle auf die zweite reflektiert und von dieser aus in die gleiche Richtung, aus der die Welle kam, parallel zu dieser wieder abgestrahlt. Als wirksame Reflektionsfläche steht die Projektionsfläche der beiden Seitenbereiche, der die Ecke bildenden Ebenen, von der Sicht des Sensors aus zur Verfügung. Die Ecke hat dabei auch die günstige, hier ausgenutzte Eigenschaft, daß bei beliebigem Reflektionsweg über die beiden Seitenebenen der von der Schallwelle zurückgelegte Weg immer dem Weg genau bis zum Eckpunkt und zurück entspricht.

Als Merkmale reichen bereits schmale innere oder äußere Ecken aus, wie sie beispielsweise als Versteifungsrippen oft aus konstruktiven Gründen ohnehin vorhanden oder zumindest sinnvoll sind.

Für die Anordnung der Ultraschall-Abstandsmesser zueinander sind die folgenden Bedingungen zugrundezulegen:

Keine direkten Echos, sondern ausschließlich Reflektionen durch die Linienmerkmale,

keine Echos durch andere Teile des Behälters,

keine Echos durch externe Objekte,

Eindeutigkeit der Zuordnung der abstandsmessenden Sensoren zu einzelnen Linienmerkmalen,

Abdeckung des gesamten Meßbereichs,

ausreichende Breite der Peilbasis als Einflußgröße für die Meßgenauigkeit.

Die Wahl der Anordnung bezüglich Meßposition und Richtung sowie der Keulenbreite der einzelnen Wandler ist derart zu treffen, daß insbesondere die folgenden Forderungen eingehalten werden:

Das jeweilige Linienmerkmal muß für den gesamten zulässigen Meßbereich des Objekts immer in der Meßkeule des Sensors verbleiben, da sonst keine Erfassung erfolgen kann.

Es dürfen keine direkten Reflektionen von der Oberfläche des Objektes erfolgen. Der Schall unterliegt beim Auftreffen auf eine ebene Oberfläche dem Reflektionsgesetz "Einfallwinkel = Ausfallwinkel".

Alle Ultraschallwandler müssen deshalb derart schräg zur Objektoberfläche angeordnet sein, daß alle auf die Objekt-Oberfläche auftreffenden Schallwellen aus dem Empfangsbereich des Sensors herausreflektiert werden und keine direkten Echos auftreten.

Innerhalb der Schallkeulen der Sensoren dürfen am Objekt sowie in der unmittelbaren Umgebung des Objekts keine ein störendes Echo erzeugenden Teile vorhanden sein. Mit anderen Worten, die Schallkeulen der Sensoren müssen derart ausgeformt sein, daß diese Störbereiche nicht in das Erfassungsfeld des Sensors fallen.

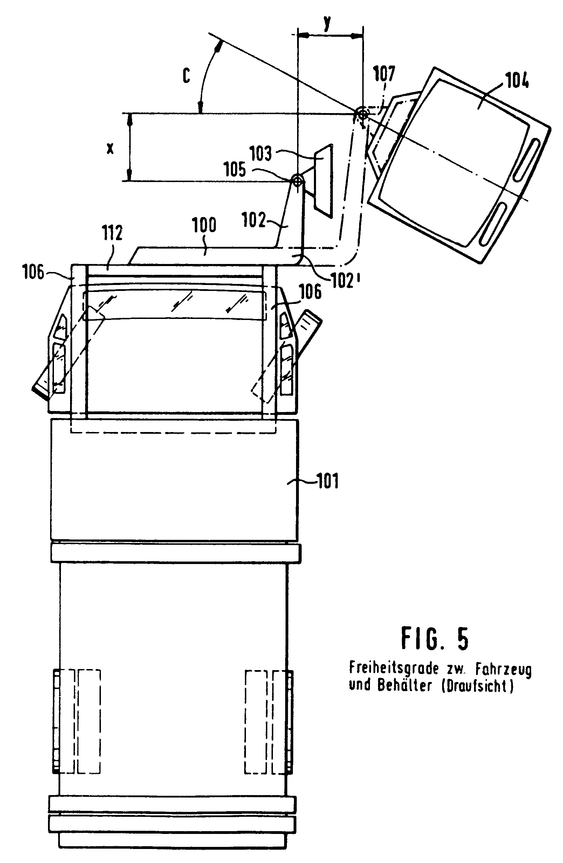

Ein besonderes Anwendungsbeispiel des anhand der Fig. 1 bis 4 beschriebenen Meß- und Erfassungssystems wird nachstehend anhand der Fig. 5 bis 9 bei einem Müllsammelfahrzeug näher erläutert.

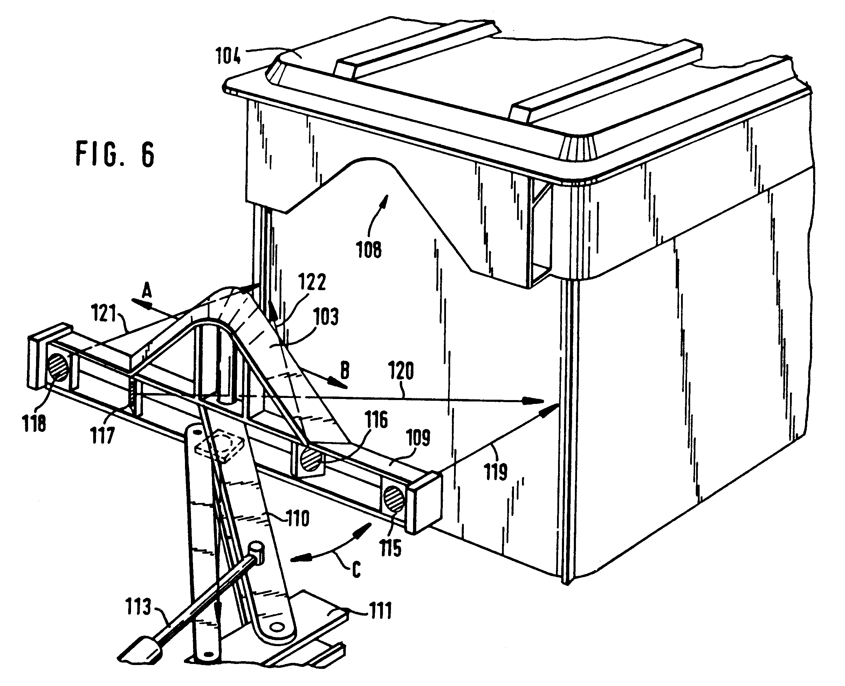

Wie aus den Fig. 5 und 6 ersichtlich ist, befindet sich an der Frontseite des Müllsammelfahrzeuges 101 eine Hubkippvorrichtung, die einen Greifarm 102 und eine an diesen durch das Gelenk 105 mit vertikaler Schwenkachse angelenkte Greifklaue 103 aufweist. Der Greifarm 102 läßt sich in Richtung Y und die Greifklaue 103 in Richtung X durch entsprechende Führungs-, Getriebe- und Antriebsmittel ausfahren. Die Greifklaue 103 läßt sich zusätzlich um ihr Gelenk 105 verschwenken. Zusätzlich kann die Greifklaue 103 durch Verschwenken der Hubarme 106 relativ zur Standfläche des Müllbehälters 104 gehoben und abgesenkt werden. Aufgrund ihrer Freiheitsgrade läßt sich die Greifklaue 103 aus ihrer in vollen Linien dargestellten Stellung in Fig. 5 in ihre Greifposition 107 verfahren.

Der Greifarm 102 ist um das Gelenk 102' relativ zu dem Träger 100 schwenkbar. Zum Verfahren des Trägers 100 und zum Verschwenken des Greifarms 102 sind nicht dargestellte Antriebe vorgesehen.

Die Greifklaue 103 besteht, wie aus Fig. 6 ersichtlich ist, aus einem etwa dreieckigen Aufnahmekörper mit mittiger, nach oben weisender abgerundeter Spitze, wobei die dem Müllbehälter zugewandte Vorderwand der Greifklaue 103 im wesentlichen eben ist und deren Rückseite keilförmig schräg oder kalottenartig abgerundet ist. Die unterhalb des oberen Randes des Müllbehälters 104 vorgesehene Aufnahmetasche 108 weist ein entsprechend komplementäres Profil auf.

Die Greifklaue 103 ist in Führungen des Querträgers 109 durch nicht dargestellte Antriebsmittel in Richtung der Pfeile A, B verfahrbar. Der horizontale Träger 109 ist um eine vertikale Achse schwenkbar an dem Schwenkarm 110 angelenkt. Durch nicht dargestellte Antriebsmittel läßt sich daher der horizontale Träger 109 in Richtung des Doppelpfeils C verschwenken. Der Arm 110 ist auf dem Träger 111 angelenkt, der auf der Grundschiene 112 der Hubkippvorrichtung, die die Hubarme 106 verbindet, querverschieblich in Richtung y geführt ist. Zur Verschwenkung des Schwenkarms 110 ist mit diesem und dem Träger 111 die Druckmittelkolbenzylindereinheit 113 gelenkig verbunden. Statt dieses Schwenkantriebes kann auch eine Kurvenrollenführung vorgesehen werden.

Der Querträger 109 ist in der aus Fig. 6 ersichtlichen Weise mit Peilsensoren 115, 116, 117, 118 versehen. Diese Peilsensoren senden gerichtete Peilstrahlen 119, 120, 121, 122 aus, welche von den Kanten des Müllbehälters 104, auf die sie gerichtet sind, reflektiert und wieder aufgefangen werden.

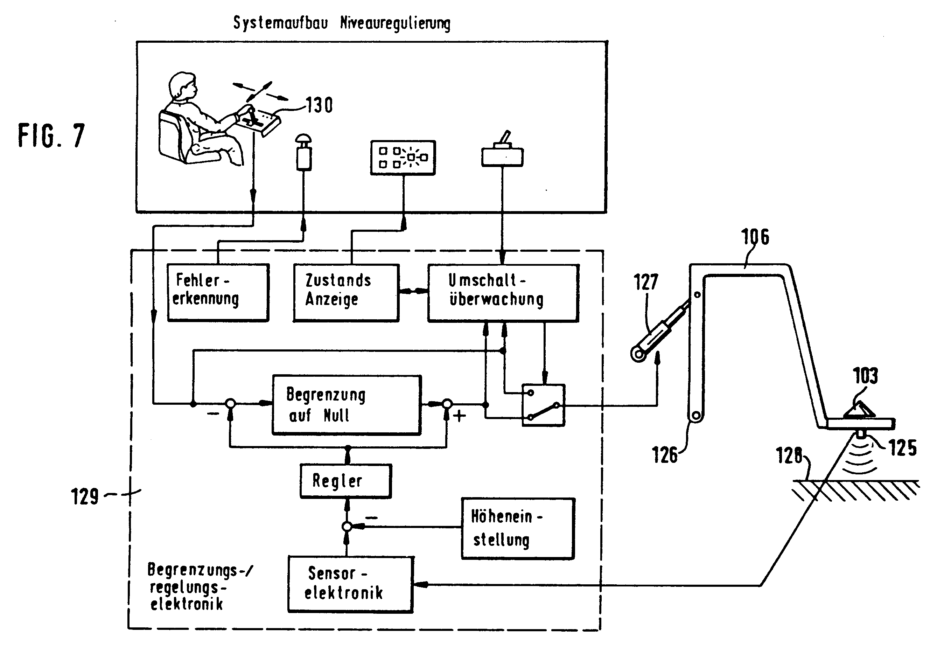

In Fig. 7 ist die Niveauregulierung schematisch dargestellt. Ein Sensor 125 ist an der mit dem Hubarm 106 verbundenen Greifeinrichtung vorgesehen, wobei der Hubarm 106 entsprechend dem gemessenen Höhenabstand zur Standfläche 128 durch den Hydraulikzylinder 127 um das Gelenk 126 des Hubarms heb- und absenkbar ist.

Die Signale des Sensors 125 werden der Sensorelektronik 129 zugeführt, von deren Ausgangswert der Wert der Höheneinstellung abgezogen wird. Diese Regeldifferenz wird dem Regler zugeführt, welcher in Abhängigkeit von seinem Eingangssignal ein positives oder negatives Ausgangssignal erzeugt. Abhängig hiervon wird der Hydraulikzylinder 127 angesteuert, der den Greifarm 106 um das Gelenk 126 verschwenkt und damit die Greifklaue 103 in annähernd vertikaler Richtung bewegt. Wie aus dem Blockschaltbild 29 ersichtlich ist, sind weiterhin eine Fehlererkennungseinheit, eine Zustandsanzeigeeinheit und eine Umschaltüberwachungseinheit vorgesehen.

Der Fahrer betätigt lediglich von Hand eine Steuereinrichtung 130 zur Annäherung der Greifklaue 103 an den Müllbehälter 104. Sobald die Sensoren die Umrisse des Müllbehälters erfassen, wird eine entsprechende Automatik eingeschaltet.

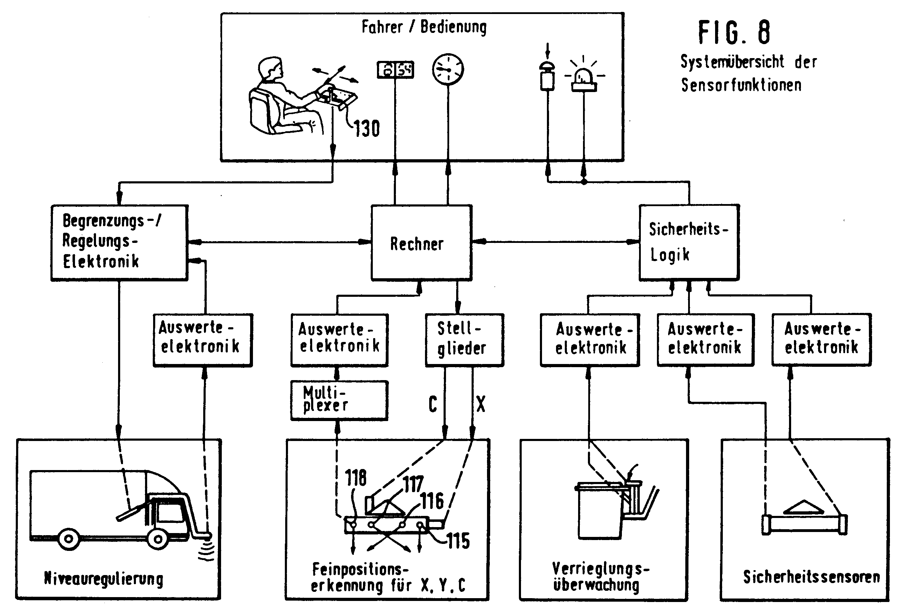

Fig. 8 zeigt eine Systemübersicht der Sensorfunktionen der Greifvorrichtung. Die Signale der Sensoren 115, 116, 117, 118 werden über einen Multiplexer einer Auswerteelektronik zugeführt, deren Ausgangssignale von einem Rechner verarbeitet werden.

Der Rechner ermittelt hieraus und aus den Signalen der Begrenzungs-/Regelungs-Elektronik die Signale für die Stellglieder, die den Greifarm in X-Richtung und Y-Richtung bewegen und die weiterhin den Greifer in C-Richtung verschwenken. Hierbei ist die X-Richtung diejenige in Richtung der Fahrzeuglängsachse, die Y-Richtung diejenige horizontal senkrecht zur X-Richtung und die C-Drehung die Verschwenkung der Greifklaue 103 relativ zum Schwenkarm 110. Die Bedienungsperson des Müllsammelfahrzeugs kann hierbei über einen Funktionshebel 130 Befehle an die Begrenzungs-/Regelungs-Elektronik geben. Der Rechner gibt Informationen über Sichtanzeigen aus, die der Fahrer ablesen kann.

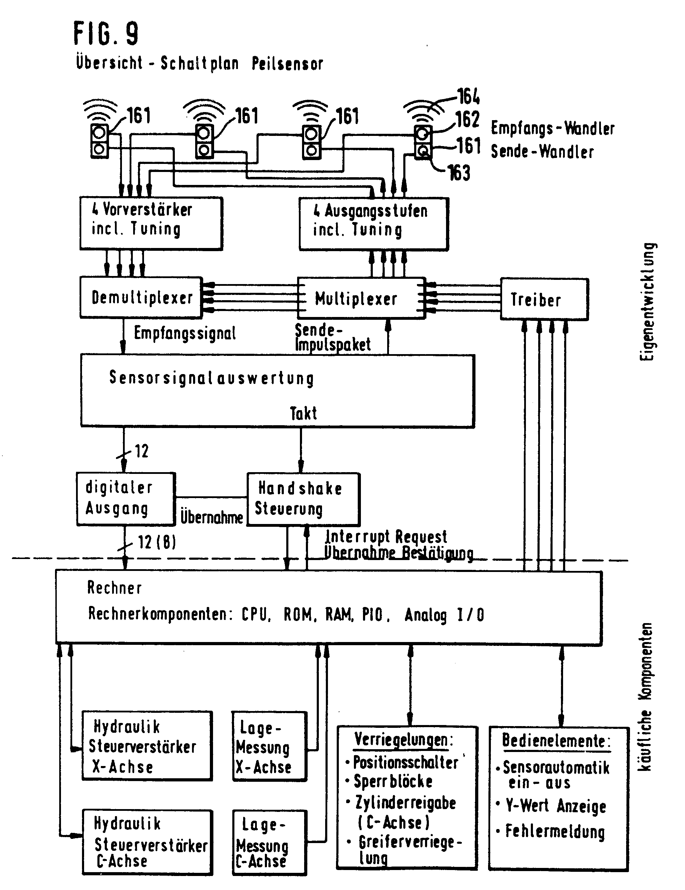

Fig. 9 zeigt einen Übersichtsschaltplan der Peilsensoren. Jeder der vier Peilsensoren 161 besteht aus einem Empfangswandler 162 und aus einem Sendewandler 163. Der Rechner in Form eines Mikrocomputers steuert über einen Treiber und einen Multiplexer die vier Ausgangsstufen für die Sendewandler 163 der Peilsensoren 162 an. In Abhängigkeit der von der Ausgangsstufe an den Sendewandler 163 abgegebenen Signale werden Peilsignale 164 ausgesendet. Die von dem Müllbehälter reflektierten Peilsignale 164 werden von den Empfangs-Wandlern 162 aufgefangen, umgewandelt und die vier Vorverstärker übermittelt. Nach ihrer Verstärkung in den Verstärkern werden sie über einen vom Multiplexer gesteuerten Demultiplexer als Empfangssignal der Sensorsignal-Auswertung zugeführt. Die ausgewerteten Sensorsignale werden anschließend über den digitalen Ausgang dem Rechner zur Verarbeitung zugeleitet. Der Rechner steht dabei im Datenaustausch mit der Hydraulik und dem Steuerverstärker sowohl für die X-Achse als auch für die C-Achse. Dem Rechner wird die Lage sowohl der X-Achse als auch der C-Achse über zwei entsprechende Lagemessungseinheiten mitgeteilt. Der Rechner steht weiterhin in Verbindung mit einer Verriegelungseinheit und mit den Bedienungselementen.

Die in Fig. 8 gezeigte Überwachung der Verriegelung geschieht am besten durch induktive Näherungsinitiatoren, die auf die Anwesenheit von metallischen Objekten reagieren. Auf diese Weise kann erkannt werden, ob der metallische Verriegelungsbügel in seiner geschlossenen Position ist oder durch falschliegende Behälter blockiert wird.

Die anhand der Fig. 7 beschriebene Niveauregulierung soll unbeabsichtigte Kollisionen des Handhabungsarmes mit dem Boden vermeiden. Ursachen hierfür können Bedienungsfehler oder das Fahrzeugverhalten sein. Hauptschwierigkeit ist die schlechte Abschätzungsmöglichkeit der Höhendifferenz aus der Sich des Fahrers.

Die Abwärtsbewegung des Liftes soll auf einen Mindestwert begrenzt werden. Auf der anderen Seite darf oberhalb dieses Höhenwertes die Bedienungsmöglichkeit nicht eingeschränkt werden. Bei Querbewegungen des Schwenkarms soll der Greifer in konstantem Abstand dem Boden folgen und derart auch Stufen wie Bordsteinkanten mitberücksichtigen. Zur Erkennung der Höhe des Greifers über dem Boden ist ein abstandsmessender Ultraschallsensor vorgesehen.

In dem beschriebenen System wird für die große Vorpositionierung der Handhabungsarm manuell gesteuert. Im Nahbereich schaltet sich die Feinpositionier-Automatik ein. Diese geht von der durch den Peilsensor ermittelten Relativposition des Greifers zum Behälter aus.

Die Umrechnung der Sensor-Daten in erforderliche Bewegungsänderungen geschieht in einem Rechner, der gleichzeitig die Steuerung und Lageregelung für die Antriebe von zwei zusätzlichen Bewegungsachsen direkt im Greifer übernimmt.

Der Greifer wird auf diese Weise in der Drehrichtung parallel zur Behälterwand ausgerichtet und mit einer Linearachse in Übereinstimmung mit der Aufnahmevorrichtung am Behälter gebracht. Der Abstand wird weiterhin manuell gesteuert, kann aber dem Fahrer über eine Anzeige im Fahrerhaus als Positionierhilfe mitgeteilt werden. Eine automatische Einflußnahme auf die Hauptachsen des Handhabungsarmes kann damit entfallen.

Das Rechnersystem ist für die Auswertung der Sensorsignale sowie für die Steuerung und Regelung der beiden Greiferachsen zuständig. Beim Peilsensor sind die Auswahl und Ansteuerung der zu aktivierenden Einzelsensoren sowie die Auswertung der Meßergebnisse und die Umrechnung in das Greifer-Koordinatensystem vom Rechner durchzuführen. Die ermittelten Sensorergebnisse sind als Sollwerte für die beiden Bewegungsachsen aufzubereiten, die Ist-Position der Achsen einzulesen und eine Lageregelung der Bewegungen durchzuführen.

Darüberhinaus können die Positionsendschalter in den Enden der Achsen und die Betätigung der Greiferverriegelung kontrolliert werden.

**Patentansprüche**

1. System zur Bestimmung der Lage eines Objektes (8) relativ zu einer Handhabungseinrichtung (1) in mindestens einer Ebene, wobei das System einerseits mindestens drei Ultraschallsensoren (2, 3, 4, 5; 115, 116, 117, 118), die aus Ultraschallsendern und -empfängern bestehen und an der Handhabungseinrichtung (1) angeordnet sind, und andererseits vorbestimmte Merkmale (6, 7), die an dem Objekt (8) angeordnet sind, aufweist,

**dadurch gekennzeichnet**,

daß die an der Handhabungseinrichtung (1) angeordneten abstandsmessenden Ultraschallsensoren (2, 3, 4, 5; 115, 116, 117, 118) zu einer gemeinsamen Bezugsebene angewinkelt sind, wobei zwei auf ein erstes langgestrecktes linienförmiges Merkmal (6) und der dritte auf ein zweites langgestrecktes linienförmiges Merkmal (7) des Objektes (8) ausrichtbar sind, daß die linienförmigen Merkmale (6, 7) derart angeordnet sind, daß die Schallwellen der Ultraschallsensoren (2, 3, 4, 5; 115, 116, 117, 118) parallel zur Einfallsrichtung reflektiert werden, und daß die beiden linienförmigen Merkmale (6, 7) parallel zueinander mit vorbestimmtem Abstand voneinander verlaufen.

2. System nach Anspruch 1, dadurch gekennzeichnet, daß die Ultraschallsensoren (2, 3, 4, 5) in einer Ebene angeordnet sind, die senkrecht zu der gemeinsamen Bezugsebene ausgerichtet ist, bezüglich der die Ultraschallsensoren (2, 3, 4, 5) angewinkelt sind.

3. System nach Anspruch 1 und 2, dadurch gekennzeichnet, daß die Ultraschallsensoren (2, 3, 4, 5) auf einer gemeinsamen geraden Linie angeordnet sind.

4. System nach einem der Ansprüche 1-3, dadurch gekennzeichnet, daß ein vierter Ultraschallsensor auf das zweite linienförmige Merkmal ausrichtbar ist.

5.  System nach Anspruch 4, dadurch gekennzeichnet, daß je zwei Ultraschallsensoren (2, 3, 4, 5) paarweise und symmetrisch zueinander angeordnet sind.

6.  System nach einem der Ansprüche 1 bis 5, dadurch gekennzeichnet, daß die Linienmerkmale aus rechtwinkelig auf einer ebenen, zu erfassenden Wandung (1) des Objektes (8) stehenden Leiste (6, 7) oder aus in der Wandung verlaufenden Riefen oder nutförmigen Vertiefungen mit mindestens zwei rechtwinkelig zueinander stehenden Flanken und/oder Wandungen bestehen.

7.  System nach einem der Ansprüche 1 bis 5, dadurch gekennzeichnet, daß die Linienmerkmale aus rauhen Streifen bestehen.

8.  System nach einem der Ansprüche 1 bis 5, dadurch gekennzeichnet, daß die Linienmerkmale aus stegartig verlängerten Kanten des Objektes (8) bestehen.

9.  System nach einem der Ansprüche 1 bis 8, dadurch gekennzeichnet, daß winkelig, vorzugsweise rechtwinkelig, zu der ersten Gruppe von Ultraschallsensoren (2, 3) eine zweite Gruppe von Ultraschallsensoren (4, 5) angeordnet ist, die besondere diesen zugeordnete Linienmerkmale erfassen.

10. System nach Anspruch 9, dadurch gekennzeichnet, daß punktförmige schallreflektierende Merkmale, zum Beispiel Triplespiegel, vorgesehen sind.

11. System nach einem der Ansprüche 1 bis 10, dadurch gekennzeichnet, daß die einzelnen Ultraschallsensoren (2, 3, 4, 5) in zeitlichem Abstand zueinander aktiviert werden.

12. System nach einem der Ansprüche 1 bis 11, dadurch gekennzeichnet, daß die einzelnen Ultraschallsensoren (2, 3, 4, 5) mit unterschiedlichen Frequenzen betrieben werden.

13. Hubkippvorrichtung für ein Müllsammelfahrzeug (101) mit einer an einem Hubarm (106) angeordneten Kupplungseinrichtung (103) für mit entsprechenden komplementären Kupplungseinrichtungen versehene Müllbehälter (104) und mit einem System nach einem der Ansprüche 1 bis 12, dadurch gekennzeichnet, daß die Kupplungseinrichtung (103) des Hubarms (106) durch entsprechende Antriebe heb- und absenkbar, relativ zum Müllsammelfahrzeug (101) seitlich ausfahrbar und/oder ausschwenkbar und um eine vertikale Achse schwenkbar ist, daß die Sensoren (115, 116, 117, 118) an der Kupplungseinrichtung (103) oder an mit dieser verbundenen Teilen angeordnet sind, wobei sie deren Höhe über der Standfläche und durch die Marken und/oder durch die Konturen und/oder durch die Umrisse des Müllbehälters (104) erfassen, und daß eine Steuereinrichtung vorgesehen ist, die entsprechend den von den Sensoren (115, 116, 117, 118) erzeugten Signale die Antriebe zum kuppelnden Eingriff der Kupplungseinrichtung (103) des Hubarms (106) in die Kupplungseinrichtung (108) des Müllbehälters (104) betätigt.

14. Hubkippvorrichtung nach Anspruch 13, dadurch gekennzeichnet, daß sie mindestens einen um eine Querachse der Schütteinheit oder des Chassis des Müllsammelfahrzeugs (101) schwenkbaren Hubarm (106) aufweist, der an seinem freien Ende eine zu der Querachse parallele Grundschiene (112) trägt, die zwischen ihrem Aufnahmebereich und ihrem Schüttbereich schwenkbar ist, daß die Kupplungseinrichtung (103) auf einem horizontalen Träger (109) längsverschieblich geführt ist, der um eine vertikale Achse schwenkbar auf einem Schwenkarm (110) gelagert ist, der um eine zweite vertikale Achse auf einem auf der Grundschiene (112) verschieblich geführten Träger (111) gehaltert ist.

15. Hubkippvorrichtung nach Anspruch 13 oder 14, dadurch gekennzeichnet, daß die Steuereinrichtung mit einer Automatik versehen ist, die nach Annäherung der Kupplungsvorrichtung (103) an den Müllbehälter (104) in den Wirkungsbereich der Sensoren (115, 116, 117, 118) die Antriebe zum kuppelnden Eingriff, Verriegelung, Heben, Schütten und lagerichtigen Absetzen steuert.

16. Hubkippvorrichtung nach einem der Ansprüche 13 bis 15, dadurch gekennzeichnet, daß die Höhe des Greifers relativ zur Fahrbahn bzw. Standfläche mittels Sensoren erfaßt und der Greifer automatisch in einer bestimmten Höhe zur Fahrbahn gehalten wird.

17. Hubkippvorrichtung nach einem der Ansprüche 13 bis 16, dadurch gekennzeichnet, daß der Müllbehälter (104) Sicken oder Hohlkehlen oder Rippen als Reflektoren für die Sensoren (115, 116, 117, 118) aufweist.

18. Hubkippvorrichtung nach einem der Ansprüche 13 bis 17, dadurch gekennzeichnet, daß als Sensoren (115, 116, 117, 118) abstandsmessende Ultraschallsensoren vorgesehen sind.

19. Hubkippvorrichtung nach Anspruch 18, dadurch gekennzeichnet, daß die abstandsmessenden Ultraschallsensoren eine hohe Meßfrequenz und/oder gute Strahlbündelung aufweisen.

20. Hubkippvorrichtung nach einem der Ansprüche 13 bis 19, dadurch gekennzeichnet, daß die Sensoren (115, 116, 117, 118) jeweils paarweise eine der Behälterkanten anpeilen.

21. Hubkippvorrichtung nach Anspruch 20, dadurch gekennzeichnet, daß die Sensoren (115, 116, 117, 118) paarweise winkelig zueinander angeordnet sind.

22. Hubkippvorrichtung nach einem der Ansprüche 13 bis 21, dadurch gekennzeichnet, daß zwischen dem Bedienungselement und dem Sensorteil für die Hydraulik der Höhenverstellung eine variable Begrenzungs- und Regelungsbaugruppe vorgesehen ist.

**Claims**

1. A system for determining the position of an object (8) relative to a handling appliance (1) in at least one plane, wherein the system has on the one hand, at least three ultrasonic sensors (2, 3, 4, 5; 115, 116, 117, 118) which consist of ultrasonic transmitters and receivers and are arranged on the handling appliance (1), and on the other hand, predetermined marks (6, 7) arranged on the object (8),

   characterized in that

   the distance measuring ultrasonic sensors (2, 3, 4, 5; 115, 116, 117, 118) arranged on the handling appliance (1) are angled to a common plane of reference wherein two can be orientated to a first elongate linear mark (6) and the third to a second elongate linear mark (7) of the object (8), that the linear marks (6, 7) are arranged in such a way that the sound waves of the ultrasonic sensors (2, 3, 4, 5; 115, 116, 117, 118) are reflected parallel to the direction of incidence and that the two linear marks (6, 7) extend parallel to each other at a predetermined distance from each other.

2. A system according to claim 1, characterized in that the ultrasonic sensors (2, 3, 4, 5) are arranged in a plane vertically orientated to the common reference plane, with reference to which the three ultrasonic sensors (2, 3, 4, 5) are angled.

3. A system according to claims 1 and 2, characterized in that the ultrasonic sensors (2, 3, 4, 5) are arranged on a common straight line.

4. A system according to one of claims 1 to 3, characterized in that a fourth ultrasonic sensor can be orientated to the second linear mark.

5. A system according to claim 4, characterized in that two ultrasonic sensors (2, 3, 4, 5) are respectively arranged in pairs and symmetrically with respect to each other.

6. A system according to one of claims 1 to 5, characterized in that the line marks consist of a flat slat (6, 7) disposed at right angles to the wall (1) to be detected of the object (8) or of grooves extending in the wall, or channel-shaped recesses with at least two sides and/or walls disposed at right angles to each other.

7. A system according to one of claims 1 to 5, characterized in that the line marks consist of rough strips.

8. A system according to one of claims 1 to 5, characterized in that the line marks consist of flange-like extended edges of the object (8).

9. A system according to one of claims 1 to 8, characterized in that a second group of ultrasonic sensors (4, 5) detecting specific line marks assigned to them is arranged at an angle, preferably at right angles to the first group of ultrasonic sensors (2, 3).

10. A system according to claim 9, characterized in that provision is made for punctiform sound reflecting marks, for example, triple reflectors.

11. A system according to one of claims 1 to 10, characterized in that the individual ultrasonic sensors (2, 3, 4, 5) are activated at time intervals staggered with respect to each other.

12. A system according to one of claims 1 to 11, characterized in that the individual ultrasonic sensors (2, 3, 4, 5) are operated at different frequencies.

13. A lifting and tipping appliance for a refuse collection vehicle (101) with a coupling device (103) arranged on a lifting arm (106) for refuse bins (104) provided with corresponding complementary coupling devices and with a system according to one of claims 1 to 12, characterized in that the coupling device (103) of the lifting arm (106) can be lifted and lowered by appropriate drives, be laterally moved and/or pivoted relative to the refuse collection vehicle (101) and be swivelled round a vertical axis, that the sensors (115, 116, 117, 118) are arranged on the coupling device (103) or on Parts connected thereto, in which arrangement they detect its/their height above the base by the marks and/or by the contours and or the outlines of the refuse bin (104) and that provision is made for a control device which actuates the drives for the coupling engagement of the coupling device (103) of the lifting arm (106) in the coupling device (108) of the refuse bin (104), according to the signals generated by the sensors (115, 116, 117, 118).

14. A lifting and tipping appliance according to claim 13, characterized in that it has at least one lifting arm (106) pivotable round a transverse axis of the dumping unit or of the chassis of the refuse collection vehicle (101), which arm carries at one of its free ends a base rail (112) parallel to the transverse axis, which rail is pivotable between its collection zone and its dumping zone, that the coupling device (103) is carried on a horizontal support (109) for longitudinal displacement, which support is mounted for swivelling round a vertical axis on a swivel arm (110) which is mounted round a second vertical axis on a support (111) carried for displacement on the base rail (112).

15. A lifting and tipping appliance according to claim 13 or 14, characterized in that the control device is provided with an automated system which controls the drives for the coupling engagement, locking, lifting, dumping and depositing in the right position after the coupling device (103) has approached the refuse bin (104) in the range of action of the sensors (115, 116, 117, 118).

16. A lifting and tipping appliance according to one of claims 13 to 15, characterized in that the height of the grab relative to the roadway or base is detected by means of sensors, and that the grab is automatically held at a certain height relative to the roadway.

17. A lifting and tipping appliance according to one of claims 13 to 18, characterized in that the refuse bin (104) has grooves, channels or ribs as reflectors for the sensors (115, 116, 117, 118).

18. A lifting and tipping appliance according to one of claims 13 to 17, characterized in that provision is made for distance measuring ultrasonic sensors as sensors (115, 116, 117, 118).

19. A lifting and tipping appliance according to claim 18, characterized in that the distance measuring ultrasonic sensors have a high measurement frequency and/or good beam focusing.

20. A lifting and tipping appliance according to one of claims 13 to 19, characterized in that the sensors (115, 116, 117, 118) respectively aim at one of the bin edges in pairs.

21. A lifting and tipping appliance according to claim 20, characterized in that the sensors (115, 116, 117, 118) are arranged in pairs at angles to each other.

22. A lifting and tipping appliance according to one of claims 13 to 21, characterized in that between the operating element and the sensor component for the height adjustment hydraulic system, provision is made for a variable limiting and regulating unit.

**Revendications**

1. Système pour déterminer la position d'un objet (8) par rapport à un appareil de manipulation (1) au moins dans un plan, où le système présente d'une part au moins trois capteurs à ultrasons (2, 3, 4, 5 ; 115, 116, 117, 118) qui se composent d'émetteurs et de récepteurs d'ultrasons et sont agencés sur le dispositif de manipulation (1) et d'autre part des marques prédéterminées (6, 7) qui sont prévues sur l'objet (8),
caractérisé en ce que
les capteurs à ultrasons mesurant la distance (2, 3,4, 5 ; 115, 116, 117, 118) agencés sur l'appareil de manipulation (1) forment un angle avec un plan commun de référence,où deux peuvent être dirigés vers une première marque linéaire allongée (6) et le troisième vers une seconde marque linéaire allongée (7) de l'objet (8), en ce que les marques linéaires (6, 7) sont agencées de manière que les ondes sonores des capteurs à ultrasons (2, 3, 4, 5 ; 115, 116, 117, 118) soient refléchies parallèlement à une direction d'incidence et en ce que les deux marques linéaires (6, 7) passent parallèlement l'une à l'autre à une distance prédéterminée.

2. Système selon la revendication 1, caractérisé en ce que les capteurs à ultrasons (2, 3, 4, 5) sont agencés dans un plan qui est perpendiculaire au plan commun de référence, par rapport auquel les capteurs à ultrasons (2, 3, 4, 5) sont en angle.

3. Système selon la revendication 1 ou 2, caractérisé en ce que les capteurs à ultrasons (2, 3, 4, 5) sont agencés sur une ligne droite commune.

4. Système selon l'une des revendications 1-3, caractérisé en ce qu'un quatrième capteur à ultrasons peut être dirigé vers la seconde marque linéaire.

5. Système selon la revendication 4, caractérisé en ce que, à chaque fois,deux capteurs à ultrasons (2, 3, 4, 5) sont agencés par paires et symétriquement.

6. Système selon l'une des revendications 1 à 5, caractérisé en ce que les marques linéaires se composent de baguettes (6, 7) à angle droit par rapport à une paroi plane (1) à détecter de l'objet (8) ou bien de rainures passant dans la paroi ou de renfoncements en forme de gorges ayant au moins deux flancs et/ou parois mutuellement à angle droit.

7. Système selon l'une des revendications 1 à 5, caractérisé en ce que les marques linéaires se composent de rayures brutes.

8. Système selon l'une des revendications 1 à 5, caractérisé en ce que les marques linéaires se composent des arêtes de l'objet, qui sont prolongées à la manière de nervures.

9. Système selon l'une des revendication 1 à 8, caractérisé en ce qu'un second groupe de capteurs à ultrasons (4, 5) est agencé en angle, éventuellement à angle droit, par rapport au premier groupe de capteurs à ultrasons (2, 3), et ils détectent des marques linéaires qui leur sont particulièrement affectées.

10. Système selon la revendication 9, caractérisé en ce que des marques ponctuelles réfléchissant le son, par exemple, un réflecteur triple, sont prévues.

11. Système selon l'une des revendications 1 à 10, caractérisé en ce que les capteurs à ultrasons individuels (2, 3, 4, 5) sont activés avec un certain écart dans le temps.

12. Système selon l'une des revendications 1 à 11, caractérisé en ce que les capteurs individuels à ultrasons (2, 3, 4, 5) fonctionnent à des fréquences différentes.

13. Dispositif d'élevage et de culbutage pour un camion de collecte des ordures (101) avec un appareil d'accouplement (103) agencé sur un bras élévateur (106) pour des poubelles (104) pourvues d'appareils complémentaires correspondants d'accouplement et avec un système selon l'une quelconque des revendications 1 à 12, caractérisé en ce que l'appareil d'accouplement (103) du bras élévateur (106), grâce à une commande correspondante, peut être élevé et abaissé relativement au camion de collecte des ordures (101), peut être sorti et/ou pivoté latéralement et peut être pivoté autour d'un axe vertical, en ce que les capteurs (115, 116, 117, 118) sont agencés sur l'appareil d'accouplement (103) ou bien sur des pièces reliées à celui-ci,ce qui leur permet de détecter sa hauteur au-dessus de la surface de base et par les marques et/ou par les contours et/ou par la périphérie de la poubelle (104) et en ce qu'un système de commande est prévu qui actionne,selon les signaux produits par les capteurs (115, 116, 117, 118), l'entraînement pour l'engagement de l'appareil d'accouplement (103) du bras élévateur (106) dans l'appareil d'accouplement (108) de la poubelle (104).

14. Dispositif d'élevage et de culbutage selon la revendication 13, caractérisé en ce qu'il présente au moins un bras élévateur (106) pouvant pivoter autour d'un axe transversal de l'unité de déversement ou du châssis du camion de collecte des ordures, qui porte à son extrémité libre un rail de base (112) parallèle à l'axe transversal, qui peut pivoter entre sa zone de réception et sa zone de déversement, en ce que l'appareil d'accouplement (103) est guidé longitudinalement mobile sur un support horizontal (109) qui est reçu pivotant autour d'un axe vertical sur un bras pivotant (110) qui est retenu autour d'un second axe vertical, sur un support (111) guidé mobile sur le rail de base (112).

15. Dispositif d'élevage et de culbutage selon la revendication 13 ou 14, caractérisé en ce que le système de commande est pourvu d'un automatisme qui commande après rapprochement du dispositif d'accouplement (103) par rapport à la poubelle (104) dans la zone d'action des capteurs (115, 116, 117, 118), l'entraînement pour l'accouplement, le verrouillage, la levée, le déversement et le dépôt en bonne position.

**16.** Dispositif d'élevage et de culbutage selon l'une des revendications 13 à 15, caractérisé en ce que la hauteur du preneur relativement à la chaussée ou , respectivement, à la surface d'appui est détectée au moyen de capteurs et en ce que le preneur est automatiquement maintenu à une hauteur prédéterminée par rapport à la chaussée.

**17.** Dispositif d'élevage et de culbutage selon l'une des revendications 13 à 16, caractérisé en ce que la poubelle (104) présente des moulures ou cannelures ou nervures en tant que réflecteurs pour les capteurs (115, 116, 117, 118).

**18.** Dispositif d'élevage et de culbutage selon l'une des revendications 13 à 17, caractérisé en ce qu'en tant que capteurs (115, 116, 117, 118), on prévoit des capteurs à ultrasons mesurant la distance.

**19.** Dispositif d'élevage et de culbutage selon la revendication 18, caractérisé en ce que les capteurs à ultrasons mesurant la distance présentent une haute fréquence de mesure et/ou une bonne concentration du faisceau.

**20.** Dispositif d'élevage et de culbutage selon l'une des revendications 13 à 19, caractérisé en ce que les capteurs (115, 116, 117, 118) relèvent par paires l'une des arêtes de la poubelle.

**21.** Dispositif d'élevage et de culbutage selon la revendication 20, caractérisé en ce que les capteurs (115, 116, 117, 118) sont agencés par paires mutuellement en angle.

**22.** Dispositif d'élevage et de culbutage selon l'une des revendications 13 à 21, caractérisé en ce qu'entre l'élément de commande et la partie de capteur pour l'hydraulique du déplacement en hauteur est prévu un bloc de limitation et de régulation variable.

EP 0 214 453 B1

**FIG. 1**
Prinzip des Ultraschall –
Sensorsystems

Sensorsystem mit z.B. vier
Ultraschallsendern/- Empfängern

Linienmerkmale

Linienmerkmale

Meßobjekt

**FIG. 2**
Wahl der Ausbildung der Schallkeule

Linienmerkmal

Schallwelle reflektiert
korrekt heraus an
Stellen ohne
Linienmerkmal

Paralleles Zurückreflektieren am
Linienmerkmal,
das immer in Empfangsbereich verbleiben muß

direktes Echo darf nicht
auftreten

Ultraschallsensor mit
markierter Schallkeule

# FIG. 3

Reflektionsverhalten
einer Ecke als Linienmerkmal

13

Linienmerkmal

12

14

Ultraschallsensor

# FIG. 4

Einige mögliche Ausprägungsformen für Linienmerkmale

a)

b)

c)

d)

e)

f)

# FIG. 5

Freiheitsgrade zw. Fahrzeug
und Behälter (Draufsicht)

FIG. 6

Systemaufbau Niveauregulierung

FIG. 7

130

Fehler-erkennung

Zustands Anzeige

Umschalt-überwachung

Begrenzung auf Null

Regler

Höhenein-stellung

Sensor-elektronik

129

Begrenzungs-/regelungs-elektronik

106

127

126

103

128

125

EP 0 214 453 B1

18

FIG. 8
Systemübersicht der Sensorfunktionen

**Fahrer / Bedienung** — 130

| Begrenzungs-/ Regelungs-Elektronik | Rechner | Sicherheits-Logik |

Auswerte-elektronik

Auswerte-elektronik  Stell-glieder

Auswerte-elektronik  Auswerte-elektronik  Auswerte-elektronik

Multi-plexer

C  X

118  117  116  115

Niveauregulierung

Feinpositions-erkennung für X, Y, C

Verrieglungs-überwachung

Sicherheitssensoren

# FIG. 9

Übersicht - Schaltplan  Peilsensor

| | |
|---|---|
| 164 | |
| 162 | Empfangs-Wandler |
| 161 | Sende-Wandler |
| 163 | |

161    161    161    161

| 4 Vorverstärker incl. Tuning | 4 Ausgangsstufen incl. Tuning |
|---|---|

| Demultiplexer | Multiplexer | Treiber |
|---|---|---|

Empfangssignal      Sende-Impulspaket

| Sensorsignalauswertung |
|---|
| Takt |

12

| digitaler Ausgang | Übernahme | Handshake Steuerung |
|---|---|---|

12 (8)                              Interrupt Request
                                    Übernahme Bestätigung

| Rechner |
|---|
| Rechnerkomponenten: CPU, ROM, RAM, PIO, Analog I/O |

| Hydraulik Steuerverstärker X-Achse | Lage-Messung X-Achse | Verriegelungen: • Positionsschalter • Sperrblöcke • Zylinderreigabe (C-Achse) • Greiferverriege-lung | Bedienelemente: • Sensorautomatik ein-aus • Y-Wert Anzeige • Fehlermeldung |
|---|---|---|---|
| Hydraulik Steuerverstärker C-Achse | Lage-Messung C-Achse | | |

Eigenentwicklung

käufliche Komponenten

20